(19) **Europäisches Patentamt / European Patent Office / Office européen des brevets**

(11) **EP 4 672 647 A1**

(12) **EUROPEAN PATENT APPLICATION**
published in accordance with Art. 153(4) EPC

(43) Date of publication:
**31.12.2025 Bulletin 2026/01**

(21) Application number: **24784132.3**

(22) Date of filing: **27.03.2024**

(51) International Patent Classification (IPC):
**H04L 1/00** (2006.01)

(52) Cooperative Patent Classification (CPC):
**H04L 1/00; H04L 5/00**

(86) International application number:
**PCT/CN2024/084047**

(87) International publication number:
**WO 2024/208047 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 CN 202310403960**

(71) Applicant: **Huawei Technologies Co., Ltd.**
**Shenzhen, Guangdong 518129 (CN)**

(72) Inventors:
- **FENG, Xibao**
  **Shenzhen, Guangdong 518129 (CN)**
- **YANG, Gang**
  **Shenzhen, Guangdong 518129 (CN)**
- **YANG, Panyi**
  **Shenzhen, Guangdong 518129 (CN)**
- **LI, Shuai**
  **80992 Munich (DE)**

(74) Representative: **Gill Jennings & Every LLP**
**The Broadgate Tower**
**20 Primrose Street**
**London EC2A 2ES (GB)**

(54) **REFERENCE SIGNAL SENDING METHOD AND APPARATUS, AND REFERENCE SIGNAL RECEIVING METHOD AND APPARATUS**

(57) This application provides a reference signal sending method and receiving method and an apparatus. A terminal device generates a frame. The frame includes data and a plurality of reference signals, and a difference between start positions of two adjacent reference signals is associated with a maximum sampling clock offset allowed by the terminal device. According to the method, a performance loss caused by a sampling clock offset introduced by a low-precision ring oscillator can be reduced, and receiving performance of a receiving device can be improved.

EP 4 672 647 A1

```
        ┌─────────────────┐          ┌─────────────────┐
        │ Terminal device │          │  Network device │
        └────────┬────────┘          └────────┬────────┘
                 │                            │
        S601     │                            │
  Generate a frame, where the frame           │
  includes data and a plurality of reference  │
  signals, and a difference between start      │
  positions of two adjacent reference signals  │
  is associated with a maximum sampling         │
  clock offset allowed by the terminal device  │
                 │                            │
                 │  S602 Send the frame       │
                 │ ──────────────────────────>│
                 │                            │
```

FIG. 6

**Description**

**TECHNICAL FIELD**

This application relates to the communication field, and more specifically, to a reference signal sending method and receiving method and an apparatus.

**BACKGROUND**

A demodulation reference signal DMRS of a new radio NR (new radio) system is designed for a synchronous system. In the synchronous system, each radio frame has a strict fixed length. A base station is synchronized with a GPS, and a terminal is adjusted to be synchronized with the base station in a period of time. Therefore, impact of a large SFO does not need to be considered during DMRS design for data of the synchronous system. According to specifications of a 3GPP protocol, a sampling clock offset cannot be greater than ±0.1 ppm. In NR design, time domain resource units (symbol granularity) occupied by a DMRS and data are consistent. As a result, in case of the large SFO, the DMRS and the data cannot be distinguished, and consequently, the data is incorrectly considered as the DMRS.

As NR machine type communication (Machine Type Communication, MTC) and internet of things (Internet of Things, IoT) communication are increasingly widely applied, a quantity of connections of IoT devices increases day by day. According to market forecast, a quantity of global IoT connections will reach tens of billions or even hundreds of billions by 2030. The industry has an increasingly strong demand for reducing costs and power consumption of IoT devices.

A life cycle of the IoT terminal is usually measured in years, or even as long as 10 years. In addition, a large quantity of IoT terminals are widely distributed, and many of the IoT terminals are still installed in positions with high construction difficulty. Maintenance costs caused by periodic battery replacement are excessively high. Therefore, it is urgent to avoid battery replacement within the life cycle of the terminal. In addition, a high-performance battery that has a long service life and meets rated voltage and power requirements of a terminal module usually has high costs, significantly increasing costs of the terminal. In conclusion, an IoT terminal with low power consumption and low costs is an important evolution trend of a next-generation IoT. Due to a limitation of low power consumption, a ring oscillator with low precision and low power consumption is used as the IoT terminal, resulting in a large frequency error.

In the NR design, time domain resource units occupied by the DMRS and the data are consistent. As a result, in case of the large SFO, the DMRS and the data cannot be distinguished, and consequently, the data is incorrectly considered as the DMRS. According to specifications of an NR protocol, the sampling clock offset cannot be greater than ±0.1 ppm. However, a frequency error of an IoT terminal with low power consumption and low costs cannot meet a requirement of the NR protocol. Therefore, a reference signal of the IoT terminal with low power consumption and low costs needs to be redesigned, to reduce a performance loss caused by a sampling clock offset introduced by a low-precision ring oscillator, and further improve receiving performance of a receiving device.

**SUMMARY**

This application provides a reference signal sending method, to reduce a performance loss caused by a sampling clock offset introduced by a low-precision ring oscillator, and improve receiving performance of a receiving device.

According to a first aspect, a reference signal sending method is provided. The communication method may be performed by a first apparatus, or may be performed by a chip or a circuit disposed in the first apparatus. The first apparatus may be a terminal device.

The method includes:

The first apparatus generates a frame. The frame includes N reference signals and data, N≥2, an $i^{th}$ reference signal precedes an $(i+1)^{th}$ reference signal, and $1 \leq i \leq N$. No other reference signal precedes the $i^{th}$ reference signal and the $(i+1)^{th}$ reference signal.

At least a part of the data is included between the $i^{th}$ reference signal and the $(i+1)^{th}$ reference signal.

A time length of one symbol of the data in the first apparatus is $t1+\Delta t$, t1 is a target time length of one symbol of the data in the first apparatus, and an absolute value of $\Delta t$ is less than or equal to an absolute value t2 of a symbol time offset caused by a maximum sampling clock offset allowed by the first apparatus.

A time domain start position of the $i^{th}$ reference signal in the frame is $P_i$, a time domain start position of the $(i+1)^{th}$ reference signal in the frame is $P_{i+1}$, and $P_{i+1} - P_i$ is associated with $a$, where $a=\dfrac{t2}{t1}$, and $P_{i+1}$ and $P_i$ are integers.

The first apparatus sends the frame to a second apparatus.

According to a second aspect, a reference signal receiving method is provided. The communication method may be performed by a second apparatus, or may be performed by a chip or a circuit disposed in the second apparatus. The second apparatus may be a network device.

The method includes:
The second apparatus receives a frame, where the frame includes N reference signals and data, N≥2, an $i^{th}$ reference signal precedes an $(i+1)^{th}$ reference signal, $1 \leq i \leq N$, no other reference signal precedes the $i^{th}$ reference signal and the $(i+1)^{th}$ reference signal, and at least a part of the data is included between the $i^{th}$ reference signal and the $(i+1)^{th}$ reference signal.

A time length of one symbol of the data in a first apparatus is t1+Δt, t1 is a target time length of one symbol of the data in the first apparatus and the second apparatus, and an absolute value of Δt is less than or equal to an absolute value t2 of a symbol time offset caused by a maximum sampling clock offset allowed by the first apparatus.

A time domain start position of the $i^{th}$ reference signal in the frame is $P_i$, a time domain start position of the $(i+1)^{th}$ reference signal in the frame is $P_{i+1}$, and $P_{i+1} - P_i$ is associated with $a$, where $a = \frac{t2}{t1}$, and $P_{i+1}$ and $P_i$ are integers.

The second apparatus demodulates the data based on the N reference signals.

According to a third aspect, a reference signal sending and receiving method is provided. The method includes: A first apparatus generates a frame, where the frame includes N reference signals and data, N≥2, an $i^{th}$ reference signal precedes an $(i+1)^{th}$ reference signal, $1 \leq i \leq N$, and no other reference signal precedes the $i^{th}$ reference signal and the $(i+1)^{th}$ reference signal. At least a part of the data is included between the $i^{th}$ reference signal and the $(i+1)^{th}$ reference signal.

A time length of one symbol of the data in the first apparatus is t1+Δt, t1 is a target time length of one symbol of the data in the first apparatus and a second apparatus, and an absolute value of Δt is less than or equal to an absolute value t2 of a symbol time offset caused by a maximum sampling clock offset allowed by the first apparatus.

A time domain start position of the $i^{th}$ reference signal in the frame is $P_i$, a time domain start position of the $(i+1)^{th}$ reference signal in the frame is $P_{i+1}$, and $P_{i+1} - P_i$ is associated with $a$, where $a = \frac{t2}{t1}$, and $P_{i+1}$ and $P_i$ are integers.

The first apparatus sends the frame to the second apparatus. The second apparatus receives the frame. The second apparatus demodulates the data based on the reference signal.

According to the methods provided in this application, a performance loss caused by a sampling clock offset SFO introduced by a low-precision ring oscillator can be reduced, and receiving performance of a receiving device can be improved. When the sampling clock offset is large, a receive side searches for a reference signal at a corresponding position based on a possible position, present when the sampling clock offset is considered, of each reference signal. When the $i^{th}$ reference signal is searched for, the $(i+1)^{th}$ reference signal or an $(i-1)^{th}$ reference signal does not appear in a search range. On the receive side, positions of two adjacent reference signals are not confused, thereby improving receiving performance.

With reference to at least one of the first aspect to the third aspect, the following designs are further provided.

That $P_{i+1} - P_i$ is associated with $a$ includes: $P_{i+1} - P_i$ is associated with $a$ and at least one of the following parameters:

> a length of the data in the frame;
> N;
> a length of each reference signal in the frame; or
> $P_i$.

In an example, N≥3, the N reference signals include an $l^{th}$ reference signal, an $m^{th}$ reference signal, and an $n^{th}$ reference signal, and $1 \leq l, m, n \leq N$. The $l^{th}$ reference signal precedes the $m^{th}$ reference signal, and the $m^{th}$ reference signal precedes the $n^{th}$ reference signal. A time domain start position of the $l^{th}$ reference signal in the frame is $P_l$, a time domain start position of the $m^{th}$ reference signal in the frame is $P_m$, and a time domain start position of the $n^{th}$ reference signal in the frame is $P_n$, where $P_n - P_m > P_m - P_l$. Due to accumulated effect of the SFO, a reference signal closer to a tail of the frame has a larger SFO, and a longer distance between adjacent reference signals indicates less overlapping.

That $P_{i+1} - P_i$ is associated with $a$ includes:

$$P_{i+1} - P_i \geq \frac{(2*a)*P_i + (1+a)L_i}{(1-a)},$$

where $L_i$ is a value obtained by rounding up a length of the $i^{th}$ reference signal divided by a length of one data symbol.

$P_{i+1} - P_i \geq \frac{(2*a)*P_i + (1+a)L_i}{(1-a)}$ can avoid overlapping, due to impact of the SFO, of possible positions of the $i^{th}$ reference signal and the $(i+1)^{th}$ reference signal, and a reference signal at a corresponding position in a time window in which the SFO is considered is more accurately found, thereby improving accuracy of SFO estimation, and further improving data receiving performance on a network side.

In an example,

$$P_N \leq L_{data} + \sum_{i=1}^{N-1} L_i + 1,$$

where

$L_{data}$ is a quantity of symbols of the data, and $L_i$ is the value obtained by rounding up the length of the $i^{th}$ reference signal divided by the length of one data symbol.

In an example, that $P_{i+1} - P_i$ is associated with $a$ includes:

$$P_{i+1} - P_i \geq \max_i \left\{ \frac{(2 * a) * L_{start} + (1 + a)L_i}{(1 - 2 * i * a + a)} \right\},$$

where

$L_{start}$ is a start position of a $1^{st}$ reference signal in the N reference signals, $L_{start} \geq 1$, and $L_i$ is the value obtained by rounding up the length of the $i^{th}$ reference signal divided by the length of one data symbol. This example is a method in which adjacent DMRSs are equally spaced. Because a larger interval between adjacent DMRSs is required at a tail of the frame, $P_{i+1} - P_i$ needs to be greater than or equal to a largest value in intervals between all adjacent DMRSs. Further, reference signals at all positions in the frame do not overlap at possible positions of adjacent reference signals, and a pilot at the position is more accurately found in a time window in which the SFO is considered. On the receive side, calculation of SFO estimation is more accurate, and the receiving performance on the receive side can be improved.

In an example, $P_{i+1} - P_i \leq \frac{L_{frame} - L_N + 1 - L_{start}}{N - 1}$, where $L_{frame} = L_{data} + \sum_{i=1}^{N} L_i$, and $L_{data}$ is a quantity of symbols of the data.

The second apparatus sends indication information to the first apparatus, where the indication information indicates $P_i$, and $1 \leq i \leq N$; and

the first apparatus receives the indication information.

According to a fourth aspect, a communication apparatus is provided. The communication apparatus includes at least one processor, the at least one processor is coupled to at least one memory, and the at least one processor is configured to execute a computer program or instructions stored in the at least one memory, so that the communication apparatus performs the method according to the first aspect or the second aspect.

According to a fifth aspect, this application provides a computer-readable storage medium. The computer-readable storage medium stores instructions. When the instructions are run on a computer, the computer is enabled to perform the method according to the first aspect or the second aspect.

According to a sixth aspect, this application provides a computer program product including instructions. When the computer program product runs on a computer, the computer is enabled to perform the method according to the first aspect or the second aspect.

According to a seventh aspect, a chip apparatus is provided, including a processing circuit. The processing circuit is configured to invoke a program from a memory and run the program, so that a communication device in which the chip apparatus is installed performs the method according to any one of the possible implementations of the first aspect and the second aspect.

According to an eighth aspect, a communication system includes:

a first apparatus and a second apparatus, where the first apparatus communicates with the second apparatus; and the first apparatus performs the method according to any possible implementation of the first aspect, and the second apparatus performs the method according to any possible implementation of the second aspect.

## BRIEF DESCRIPTION OF DRAWINGS

FIG. 1 is a diagram of a communication system to which this application is applicable;
FIG. 2 is a diagram of Manchester encoding;
FIG. 3 is a diagram of FM0 encoding;

FIG. 4 is a diagram of a clock offset;

FIG. 5 is a diagram of an offset of a reference signal on a receive side and a transmit side due to a clock offset SFO between receiving and transmitting;

FIG. 6 is a diagram of a communication method according to an embodiment of this application;

FIG. 7 is a block diagram of an apparatus 700 according to an embodiment of this application; and

FIG. 8 is a block diagram of an apparatus 800 according to an embodiment of this application.

## DESCRIPTION OF EMBODIMENTS

The following describes the technical solutions of this application with reference to the accompanying drawings.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, an NR system, or a future network. The 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. The communication system may alternatively be a public land mobile network (public land mobile network, PLMN), a device-to-device (device-to-device, D2D) communication system, a machine-to-machine (machine-to-machine, M2M) communication system, an IoT communication system, or another communication system.

A terminal device (terminal equipment) in embodiments of this application may be an access terminal, a subscriber unit, a subscriber station, a mobile station a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

By way of example rather than limitation, in embodiments of this application, the wearable device may also be referred to as a wearable intelligent device, and is a general name of a wearable device developed by intelligently designing daily wear by using a wearable technology, such as glasses, gloves, watches, clothing, and shoes. The wearable device is a portable device that can be directly worn by a user or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, in embodiments of this application, the terminal device may alternatively be a terminal device in an IoT system. For example, the terminal device may alternatively be a label, for example, an active label or a passive label. An IoT is an important component in future development of information technologies. A main technical feature of the IoT is to connect things to a network by using a communication technology, to implement an intelligent network for human-machine interconnection and thing-thing interconnection. In embodiments of this application, an IoT technology can implement massive connections, deep coverage, and terminal power saving by using, for example, a narrowband (narrowband, NB) technology.

In addition, in embodiments of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to the network device.

A network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home NodeB (home evolved NodeB, HeNB, or home NodeB, HNB), a baseband unit (baseband unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi Fi) system, or may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU). The network device may alternatively be a reader/writer or the like.

In some deployments, the network device in embodiments of this application may be a central unit (central unit, CU) or a distributed unit (distributed unit, DU), or the network device includes a CU or a DU. The gNB may further include an active antenna unit (active antenna unit, AAU). The CU implements some functions of the gNB, and the DU implements some functions of the gNB. For example, the CU is responsible for processing a non-real-time protocol and service, and implements functions at a radio resource control (radio resource control, RRC) layer and a packet data convergence protocol (packet data convergence protocol, PDCP) layer. The DU is responsible for processing a physical layer protocol and a real-time service, and implements functions at a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be further divided into a central unit-control plane (central unit-control plane, CU-CP) and a central unit-user plane (central unit-user plane, CU-UP). Alternatively, the CU-CP and the CU-UP may be deployed on different physical devices. The CU-CP is responsible for a control plane function. The CU-UP is responsible for a user plane function.

The network device and the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

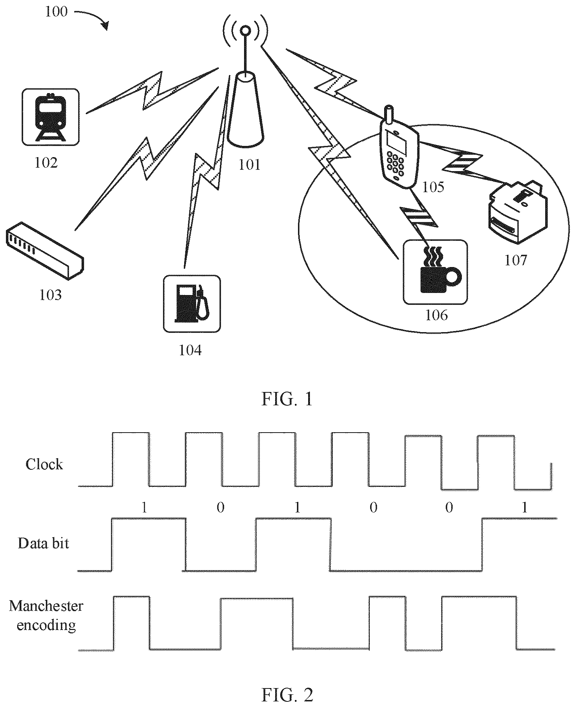

For ease of understanding embodiments of this application, a communication system shown in FIG. 1 is first used as an example to describe in detail a communication system to which embodiments of this application are applicable. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device located in the coverage area.

Optionally, the terminal devices may directly communicate with each other. For example, direct communication between the terminal devices may be implemented by using a device-to-device (device-to-device, D2D) technology. As shown in FIG. 1, the terminal devices 105 and 106, and the terminal devices 105 and 107 may directly communicate with each other by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 via the terminal device 105.

A plurality of antennas may be configured for each communication device. For each communication device in the communication system 100, the plurality of configured antennas may include at least one transmit antenna configured to send a signal and at least one receive antenna configured to receive a signal. Therefore, the communication devices in the communication system 100 may communicate with each other by using a multi-antenna technology.

For example, the terminal device in embodiments of this application is equipped with a low-power receiver circuit for envelope detection. The receiver circuit is configured to receive information. The communication system shown in FIG. 1 includes at least one terminal device equipped with a low-power receiver circuit for envelope detection (for example, one or more of the terminal device 102 to the terminal device 107 is/are equipped with a low-power receiver circuit for envelope detection).

Specifically, the terminal device equipped with the low-power receiver circuit for envelope detection in embodiments of this application may be understood as an entity, on a user side, configured to receive or transmit a signal, for example, an industrial network sensor, a video surveillance camera, a wearable device (for example, a smartwatch), a water meter, an electricity meter, and another terminal device having an auxiliary circuit.

It should be understood that FIG. 1 is merely a simplified diagram of an example for ease of understanding. The communication system 100 may further include another network device or another terminal device, which is not shown in FIG. 1.

For ease of understanding embodiments of this application, several basic concepts in embodiments of this application are briefly described.

1. Amplitude shift keying (amplitude shift keying, ASK)

If a possible state of a digital modulated signal is in a one-to-one correspondence with a binary information symbol or a corresponding baseband signal state of the binary information symbol, a modulated signal of the digital modulated signal is referred to as a binary digital modulated signal. Keying performed by using the binary information symbol is referred to as binary amplitude shift keying, and is represented by ASK.

In a "binary amplitude shift keying" scheme, a carrier whose amplitude is A represents a bit "1", and a carrier on which shutdown is performed represents a bit 0. The reverse is also applicable.

ASK is a relatively simple modulation scheme, which is equivalent to amplitude modulation in analog signals. The only difference is that a carrier frequency signal is multiplied by a binary digital code. Amplitude shift is to use a frequency and a phase as constants and an amplitude as a variable. An information bit is transmitted by using a carrier amplitude.

2. On-off keying (On-Off Keying, OOK) modulation

OOK modulation is binary amplitude shift keying. OOK is a special example of ASK modulation. A symbol with a high amplitude (or an envelope, a level, energy, or the like) (for example, higher than a threshold, or be non-zero) is referred to as an OOK symbol 1, or referred to as an OOK symbol on (ON), or referred to as an OOK symbol on; or a symbol with a low amplitude (or an envelope, a level, energy, or the like) (for example, lower than a threshold or be 0) is referred to as an OOK symbol 0, or referred to as an OOK symbol off (OFF), or referred to as an OOK symbol off. Magnitude of an amplitude is defined relative to an amplitude demodulation threshold of a receiver. If the amplitude is greater than the demodulation threshold, the amplitude is high. If the amplitude is less than the demodulation threshold, the amplitude is low.

3. Phase shift keying (phase shift keying, PSK)

Phase shift keying is a modulation technology that uses a carrier phase to represent input signal information. Binary phase modulation is used as an example. When a symbol is "1", a modulated carrier and an unmodulated carrier are in a same phase. When a symbol is "0", a modulated carrier and an unmodulated carrier are in reverse phases. When a symbol is "1" and "0", a phase difference between a modulated carrier and an unmodulated carrier is 180°.

4. Quadrature amplitude modulation (quadrature amplitude modulation, QAM)

An amplitude and a phase change at the same time, which belongs to non-constant envelope two-dimensional modulation. QAM is a combination of a quadrature carrier modulation technology and multi-level amplitude shift keying.

Quadrature amplitude shift keying is a method of combining two amplitude modulated signals (ASK and PSK) into one channel. A quadrature amplitude modulated signal has two carriers of a same frequency but with a phase difference of 90 degrees. One signal is an I-channel signal, and the other signal is a Q-channel signal. Mathematically, one signal is represented as sine, and the other is represented as cosine. The two modulated carriers have been mixed during transmission. After arriving at a destination, the carriers are separated, and data is extracted separately and then mixed with original modulation information.

In QAM, two independent baseband signals are used to perform double sideband suppressed carrier modulation on the two mutually orthogonal intra-frequency carriers. Two-channel parallel transmission of digital information is implemented by using orthogonality of spectrums of the modulated signals in a same bandwidth.

Common QAM modulation includes binary phase shift keying (binary phase shift keying, BPSK), quadrature phase shift keying (quadrature phase shift keying, QPSK), 16QAM, 64QAM, and the like.

5. Constellation point

A modulated symbol of a modulation scheme is represented as a constellation point. One coordinate axis of a coordinate system of a modulated symbol is an I channel, and represents a coordinate of an I-channel signal. The other coordinate axis of the coordinate system is a Q channel, and represents a coordinate of a Q-channel signal. For example, in QPSK modulation, four modulated symbols are $\frac{1+j}{\sqrt{2}}$, $\frac{1-j}{\sqrt{2}}$, $\frac{-1+j}{\sqrt{2}}$, and $\frac{-1-j}{\sqrt{2}}$, where $j=\sqrt{-1}$. A constellation point $\frac{1+j}{\sqrt{2}}$ is used as an example. $\frac{1}{\sqrt{2}}$ is a Q-channel coordinate, and $\frac{j}{\sqrt{2}}$ is an I-channel coordinate.

6. Coherent demodulation

Coherent demodulation, also referred to as synchronous detection, is applicable to demodulation of all linearly modulated signals. A key to implementing the coherent demodulation is that a receive end needs to restore a coherent carrier that is strictly synchronized with a modulated carrier. The coherent demodulation means inputting, by using a multiplier, a reference signal coherent with (in a same frequency and phase as) a carrier to be multiplied by the carrier.

7. Non-coherent demodulation

Compared with a coherent demodulation scheme, a non-coherent demodulation scheme used when a communication receive end restores an original digital baseband signal from a modulated high-frequency signal is a demodulation method in which carrier information does not need to be extracted. Usually, a simple circuit is used in the non-coherent demodulation method, so that the non-coherent demodulation method is easy to be implemented. However, compared with the coherent demodulation method, the non-coherent demodulation method has a slight performance loss.

8. Envelope detection

Envelope detection is a signal detection method in which a high-frequency signal is used as an input signal to obtain an envelope or an amplitude line of a low-frequency original signal via a half-wave or full-wave rectifier circuit. Based on the obtained envelope of the original signal, a receiver performs digital sampling on the envelope of the original signal, compares the envelope with an amplitude or an energy threshold set by the receiver, and determines whether a transmitted signal is 1 or 0, that is, whether the signal is on or off (ON/OFF).

9. Line encoding

Line encoding ensures that a data flow has sufficient clock information for a clock recovery circuit at a receive end. The line encoding technology can maintain a good direct current balance, increase a data transmission distance, and provide a more effective error detection mechanism.

Bits obtained through line encoding are modulated into symbols by using modulation schemes such as BPSK and ASK, and are sent to an air interface for transmission in an air interface waveform. One bit of the BPSK, the ASK, and the OOK is mapped to one symbol. Duration of one bit is duration of one symbol, and is also a length of one symbol.

10. Manchester encoding (Manchester Encoding)

Manchester encoding is line encoding, is also referred to as phase encoding (Phase Encode, PE), and is a synchronous clock encoding technology used at a physical layer to encode a clock and data of a synchronous bitstream. Its application in an Ethernet media system is a self-synchronization method (the other is an external synchronization method) in two bit synchronization methods in data communication. That is, a receiver extracts a synchronization signal from a signal itself by using a special code including the synchronization signal to lock its clock pulse frequency, thus achieving synchronization.

Manchester encoding is usually used for local area network transmission. Manchester encoding includes a clock and data in a data flow. When code information is transmitted, a clock synchronization signal is also transmitted to a peer end. Each codeword has a transition, and there is no direct current component. Therefore, Manchester encoding has a self-synchronization capability and good anti-interference performance. However, each symbol is modulated to two levels. Therefore, a data transmission rate is only half of a modulation rate.

In Manchester encoding, there is a transition in the middle of each bit, and the transition in the middle of the bit is used as both a clock signal and a data signal. One representation manner is as follows: A transition from high to low is represented by 1, and a transition from low to high is represented by 0. Alternatively, a low-high level transition is represented by 1, and a high-low level transition is represented by 0.

FIG. 2 is a diagram of Manchester encoding, where a data bit 1 is represented by 10, and a data bit 0 is represented by 01.

11. FM0 encoding

A full name of FM0 encoding (namely, Bi-Phase Space Coding) is bi-phase space coding, which is also a type of line encoding. A working principle is as follows: After one bit (bit) of data is encoded through FM0 encoding, two bits are output. Two bits of data 0 are different, and are 01 or 10. Two bits of data 1 are the same, and are 00 or 11.

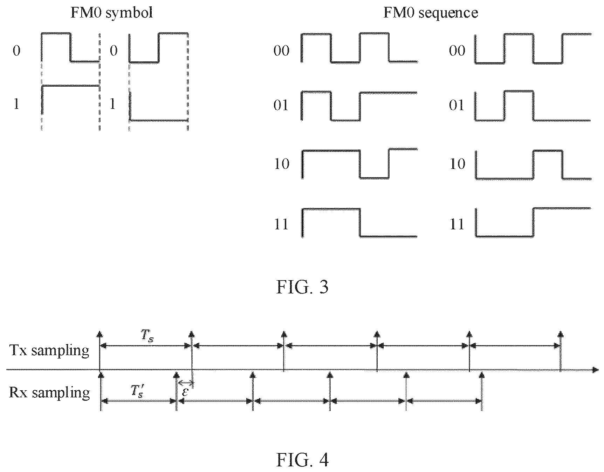

As shown in FIG. 3, a value of a bit obtained through FM0 encoding in FIG. 3 depends on a previous transmission form of the bit. A left figure in FIG. 3 is a diagram of an FM0-encoded symbol of one-bit data. One FM0 symbol includes two bits, two FM0-encoded bits of data 0 may be 10 or 01, and two FM0-encoded bits of data 1 may be 11 or 00. A right figure in FIG. 3 is a diagram of an FM0-encoded sequence of two bits. Before FM0 encoding, the bits are 00. When two FM0-encoded bits of a 1st 0 are 10, two FM0-encoded bits of a 2nd 0 are 10. When two FM0-encoded bits of a 1st 0 are 01, two FM0-encoded bits of a 2nd 0 are 01. Similarly, for bits that are 01, 10, or 11 before encoding, refer to the right figure in FIG. 3. Two FM0-encoded bits of a $(k+1)^{th}$ bit before FM0 encoding is related to a value of the $(k+1)^{th}$ bit before encoding, and is further related to a 2nd bit in two FM0-encoded bits of a $k^{th}$ bit. A 1st FM0-encoded bit of the $(k+1)^{th}$ bit before FM0 encoding is opposite to the 2nd bit in the two FM0-encoded bits of the $k^{th}$ bit. Table 1 shows a relationship between the $k^{th}$ bit and the $(k+1)^{th}$ bit before and after encoding.

Table 1: Relationship between the $k^{th}$ bit and the $(k+1)^{th}$ bit before and after FM0 encoding

| $k^{th}$ bit | Encoded bit of the $k^{th}$ bit | $(k+1)^{th}$ bit | Encoded bit of the $(k+1)^{th}$ bit |
|---|---|---|---|
| 0 | 10 | 0 | 10 |
| 0 | 01 | 0 | 01 |
| 0 | 01 | 1 | 00 |
| 0 | 10 | 1 | 11 |
| 1 | 11 | 0 | 01 |
| 1 | 00 | 0 | 10 |
| 1 | 00 | 1 | 11 |
| 1 | 11 | 1 | 00 |

12. Sampling clock offset

Due to low power consumption and low costs, a ring oscillator with low frequency precision is generally used as a low-cost IoT terminal. A sampling clock of a terminal device has lower precision than that of a network device, and an oscillator used by a terminal for sending does not match an oscillator used by a base station for receiving. As a result, sampling clocks of the terminal and the base station are inconsistent, as shown in FIG. 4. For example, a terminal device is on a transmit side, and a network device is on a receive side. Due to mismatch between transmit and receive oscillators, a symbol length on the transmit side is different from that on the receive side.

Currently, in a typical case, the sampling clock offset can reach $\varepsilon \sim \pm 10\%$ without calibration, where $\varepsilon = \frac{T_s}{T_s'} - 1$. Ts represents the symbol length on the transmit side, and Ts' represents the symbol length on the receive side.

When a sampling clock offset (Sampling frequency offset, SFO) is present, due to accumulated effect of the SFO, for example, $\varepsilon$ = 10%, $T_s = 1.1 * T_s'$, a sampling point offset of one symbol occurs every 10 symbols.

A sampling clock offset causes a symbol timing error. BPSK is used as an example. For one BPSK symbol, a bit obtained through modulation is referred to as a symbol, and BPSK means that one bit corresponds to one symbol.

The symbol timing error affects two consecutive reverse-phase symbols, and the timing error $\Delta = T_s - T_s'$. For the two consecutive reverse-phase symbols, an output amplitude of a correlator is attenuated by 1 - $(2|\Delta|/T_s)$, and a normalized timing error is $\varepsilon$. It is assumed that $\varepsilon$ is of a zero mean Gaussian distribution, and the symbols are independent of each other. In addition, a probability that two consecutive symbols are reverse is 0.5 (equal to a probability that two consecutive symbols are the same). $\varepsilon$ increases a bit error rate and further increases a code error rate. The code error rate is as follows:

$$p_b = \frac{1}{2\sqrt{2\pi}\sigma_\varepsilon} \int_{-0.5}^{0.5} Q\left(\sqrt{\frac{2E_b}{N_0}}(1-2|\varepsilon|)\right) exp\left(-\varepsilon/2\sigma_\varepsilon^2\right) d\varepsilon + \frac{1}{2} Q\left(\sqrt{\frac{2E_b}{N_0}}\right),$$

where

a first item is an error code caused by the timing error $\varepsilon$ when the two consecutive symbols are inversely phased, $\sigma_\varepsilon$ is a variance of the timing error $\varepsilon$, Q is a complementary error function, $E_b$ is energy per information bit, and $N_0$ is a noise power spectral density.

$$Q(x) = \frac{2}{\sqrt{\pi}} \int_x^{\infty} e^{-\eta^2} d\eta$$

Estimation and compensation of an SFO in a system is very important to data demodulation performance of the system.

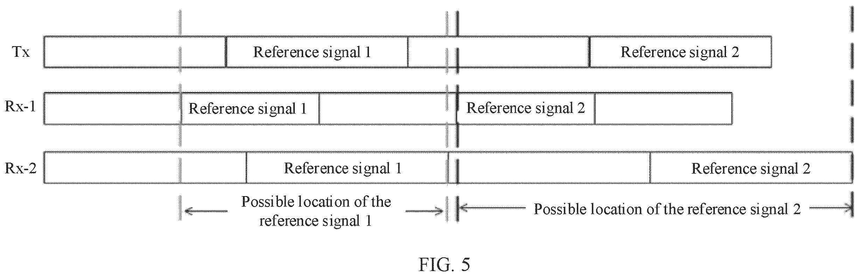

FIG. 5 is a diagram of an offset of a reference signal on a receive side and a transmit side due to a clock offset SFO between receiving and transmitting. In FIG. 5, Tx represents a time domain position of a reference signal when timing is performed on a transmit side; "Rx-1" represents a diagram of a possible time domain position of the reference signal on the receive side when symbol timing on the receive side is shorter than that on the transmit side; and "Rx-2" represents a diagram of a possible time domain position of the reference signal on the receive side when symbol timing on the receive side is longer than that on the transmit side.

An allowed sampling clock offset in communication is generally restricted by a communication protocol. For example, in a 3GPP protocol (section 6.4.1 in 3GPP TS 38.101-1 V18.0.0), a frequency error (frequency error) is restricted to be within $\pm 0.1$ppm, a maximum value is 0.1 ppm, which is denoted as b, and transmit symbol timing, on a terminal side under an allowed maximum symbol timing offset, $T_s \in \left\{\frac{T_s' * 10^6}{10^6+b}, \frac{T_s' * 10^6}{10^6-b}\right\}$.

13. Asynchronous system

Asynchronous communication is a common communication mode. Compared with synchronous communication, in asynchronous communication, when symbols are sent, a slot between the sent symbols may be arbitrary. A transmit end may start to send a symbol at any moment. Therefore, a flag needs to be added at a start and an end of each symbol, that is, a start bit and a stop bit are added, so that a receive end can correctly receive each symbol. After completing a corresponding operation, an internal processor uses a callback mechanism to notify the transmit end that the sent symbol has been replied.

In asynchronous communication, a frame may be used as a sending unit. The receive end needs to be ready to receive a frame at any time. In this case, some special bit combinations are set in a header of the frame, so that the receive end can find a start of the frame. This is also referred to as frame delimitation. The foregoing special bit combination is referred to as a preamble or a preamble sequence. The frame delimitation also includes determining an end position of the frame. There are two methods. In one method, a special bit combination is set at a tail of the frame to mark an end of the frame. Alternatively, a frame length field is set in the header of the frame. It should be noted that, when a frame is sent asynchronously, it does not mean that the transmit end needs to add a start bit and a stop bit to each character in the frame before sending the frame. Instead, the transmit end may send a frame at any time, and a time interval between frames may also be arbitrary. All bits in one frame are sent consecutively. The transmit end does not need to coordinate with the receive end before sending a frame (bit synchronization does not need to be performed first). A system in which asynchronous communication is performed is referred to as an asynchronous system. Embodiments of this application may be applied to an asynchronous system.

A reference signal may be inserted into a data frame. For example, a $k^{th}$ reference signal is inserted after an $n^{th}$ symbol, and a time domain start position of the $k^{th}$ reference signal is an $(n+1)^{th}$ symbol, which is denoted as $P_k$, where $P_k = n + 1$.

For ease of understanding of embodiments of this application, the following several points are described.

First, "first", "second", and various numeric numbers (for example, "#1" and "#2") shown in this application are merely for ease of description, and are used to distinguish between objects, but are not intended to limit the scope of embodiments of this application, for example, are used to distinguish between different messages, but are not used to describe a particular order or sequence. It should be understood that the objects described in such a way are interchangeable in an appropriate circumstance, so that a solution other than the solutions in embodiments of this application can be described.

Second, the term "and/or" in this application describes only an association relationship for describing associated objects and indicates that three relationships may exist. For example, A and/or B may indicate the following three cases: Only A exists, both A and B exist, and only B exists.

Without loss of generality, the following describes in detail a communication method provided in embodiments of this application by using interaction between a network device and a terminal device as an example. For example, a second apparatus is a network device, and a first apparatus is a terminal device. The terminal device may be a device with low power consumption, for example, a tag. The network device may be a reader/writer, or may be a base station.

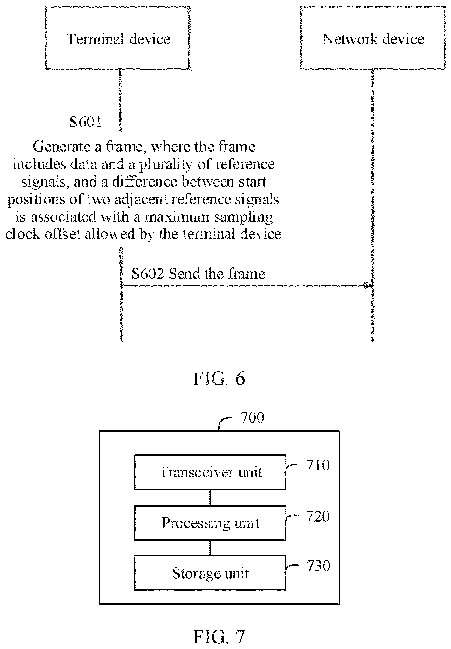

FIG. 6 is a diagram of a communication method according to an embodiment of this application. The following uses an example in which a terminal device is on a transmit side and a network device is on a receive side for description. The reverse is also applicable.

S601: The terminal device generates a frame. The frame includes data and a plurality of reference signals, and a difference between start positions of two adjacent reference signals is associated with a sampling clock offset.

The frame includes N reference signals and data, N≥2, an $i^{th}$ reference signal precedes an $(i+1)^{th}$ reference signal, 1≤i≤N, no other reference signal precedes the $i^{th}$ reference signal and the $(i+1)^{th}$ reference signal, and the $i^{th}$ reference signal and the $(i+1)^{th}$ reference signal include at least a part of the data.

A time length of one symbol of the data in the terminal device is $t1+\Delta t$. $t1$ is a target time length of one symbol of the data in the terminal device, and is also a target time length of one symbol of the data in the network device. The target time length of one symbol of the data may also be understood as an expected time length of one symbol of the data, and is an ideal value. However, due to a component error, there is a specific offset between an actual time length of one symbol of the data at the transmit side (or receive side) and the ideal value. An absolute value of $\Delta t$ is less than or equal to an absolute value $t2$ of a symbol time offset caused by a maximum sampling clock offset allowed by the first apparatus. Generally, timing of the network device is accurate. It may be considered that a time length of one symbol of data in the network device is $t1$.

A time domain start position of the $i^{th}$ reference signal in the frame is $P_i$, a time domain start position of the $(i+1)^{th}$ reference signal in the frame is $P_{i+1}$, and $P_{i+1} - P_i$ is associated with $a$. $a = \dfrac{t2}{t1}$, and $P_{i+1}$ and $P_i$ are integers.

When an SFO is large, the receive side searches for a reference signal at a corresponding position based on a possible position, present when the SFO is considered, of each reference signal. When the $i^{th}$ reference signal is searched for, the $(i+1)^{th}$ reference signal or an $(i-1)^{th}$ reference signal does not appear in a search range. On the receive side, positions of two adjacent reference signals are not confused, thereby improving receiving performance.

S602: The terminal device sends the frame to the network device. Correspondingly, the network device receives the frame. The network device demodulates the data in the frame. For example, the network device estimates a channel based on a reference signal, and then demodulates data based on the estimated channel.

In an example, $P_{i+1} - P_i$ is associated with $a$ and at least one of the following parameters:

a length of the data in the frame;
a quantity N of reference signals, for example, in FIG. 5, N=2;
a length of each reference signal in the frame; or
$P_i$.

To avoid direct confusion between adjacent reference signals, possible positions of the adjacent reference signals on the receive side do not overlap. In FIG. 5, on the receive side, possible positions of a reference signal 1 and a reference signal 2 do not overlap. Due to accumulated effect of the SFO, a later reference signal has a larger fluctuation range. As shown in FIG. 5, on the receive side, a possible position range of the reference signal 1 is less than a possible position range of the reference signal 2. In the frame, an interval between reference signals that are later in time domain is also larger. An interval between two reference signals may be understood as a difference between start positions of the two reference signals. For example, N≥3, the N reference signals include an $l^{th}$ reference signal, an $m^{th}$ reference signal, and an $n^{th}$ reference signal, and 1≤l, m, n≤N. The $l^{th}$ reference signal precedes the $m^{th}$ reference signal, the $m^{th}$ reference signal precedes the $n^{th}$ reference signal, a time domain start position of the $l^{th}$ reference signal in the frame is $P_l$, a time domain start position of the $m^{th}$ reference signal in the frame is $P_m$, and a time domain start position of the $n^{th}$ reference signal in the frame is $P_n$.

$P_n - P_m > P_m - P_l$. Due to accumulated effect of the SFO, a reference signal closer to a tail of the frame has a larger SFO, a longer distance between adjacent reference signals indicates less overlapping between a possible start position of a next reference signal and a possible end position of a previous reference signal.

That $P_{i+1} - P_i$ is associated with $a$ includes that $P_{i+1} - P_i$ satisfies the following formula:

$$P_{i+1} - P_i \geq \frac{(2*a)*P_i+(1+a)L_i}{(1-a)} \ (1)$$

$L_i$ is a value obtained by rounding up a length of the $i^{th}$ reference signal divided by a length of one data symbol.

On a terminal device side (a transmit side of the reference signal), $L_i = \left\lceil \frac{T_i}{t_1} \right\rceil$. In this case, $T_i$ is a time domain length of the $i^{th}$ reference signal on the terminal side. $T_i = L_{DMRS}(i) * t(i)$. $L_{DMRS}(i)$ is a quantity of symbols of the $i^{th}$ reference signal, and $t(i)$ is a length of one symbol of the $i^{th}$ reference signal on the terminal side.

On a network device side (a receive side of the reference signal), $L_i = \left\lceil \frac{T_i}{t_2} \right\rceil$. In this case, $T_i$ is a time domain length of the $i^{th}$ reference signal on the network device side. $T_i = L_{DMRS}(i) * t(i)$. $L_{DMRS}(i)$ is a quantity of symbols of the $i^{th}$ reference signal, and $t(i)$ is a length of one symbol of the $i^{th}$ reference signal on the network device side. $t(i)$ on the network device side and $t(i)$ on the terminal device side may be different. However, values, obtained on the terminal side and the network device side, of $L_i$ are the same.

If $P_{i+1} - P_i$ satisfies the formula (1), overlapping, due to impact of the SFO, of possible positions of the $i^{th}$ reference signal and the $(i+1)^{th}$ reference signal can be avoided, and a reference signal at a corresponding position in a time window in which the SFO is considered is more accurately found, thereby improving accuracy of SFO estimation, and further improving data receiving performance on a network side.

The following is derived according to the formula 1:

$$(1 + a) * (P_i + L_i) \leq (1 - a) * P_{i+1}$$

The foregoing formula indicates that an end symbol of an $i^{th}$ DMRS is constantly kept before a start symbol of an $(i+1)^{th}$ DMRS.

$$P_{i+1} \geq \frac{(1 + a) * (P_i + L_i)}{(1 - a)}$$

$$P_{i+1} - P_i \geq \frac{(1 - a + 2 * a) * (P_i + L_i)}{(1 - a)} - P_i = \frac{(1 - a + 2 * a) * (P_i + L_i)}{(1 - a)} - \frac{(1 - a)}{(1 - a)}P_i$$
$$= \frac{(2 * a) * P_i + (1 + a)L_i}{(1 - a)}$$

A start position $P_N$ of the last reference signal in the N reference signals satisfies the following formula:

$$P_N \leq L_{data} + \sum_{i=1}^{N-1} L_i + 1 \ (2)$$

$L_{data}$ is a quantity of symbols of the data in the frame.

It is assumed that the data length $L_{data}$ = 136 symbols, a reference signal is a DMRS, there are five DMRSs, $N$ = 5, lengths of the five DMRSs are the same, a length of the DMRS symbol is the same as a length of a data symbol, each DMRS occupies three symbols, $L = L_i = 3$, $i \in [1,5]$, a sampling clock offset $\varepsilon \in$ [-10%, 10%], and $a$ = 0.1. $L_{frame}$ is defined as a quantity of symbols included in the frame.

$L_{frame} = L_{data} + N * L$, and $P_i$ is a symbol position of an ith DMRS. When the DMRS is started to be inserted from the tail of the frame, for example, the DMRS is inserted at the end of an uplink frame:

$$P_N = L_{frame} - L + 1; P_5 = 149$$

$$P_{N-1} \leq \frac{(1-a) \cdot P_N}{(1+a)} - L = \frac{(L_{frame} - L+1)*(1-a)}{(1+a)} - L; P_4 = 118$$

$$P_{N-2} \leq \frac{(1-a) \cdot P_{N-1}}{(1+a)} - L = \frac{(L_{frame} - L+1)*(1-a)^2}{(1+a)^2} - \frac{(1-a)}{1+a} L - L; P_3 = 93$$

$$P_{N-3} \leq \frac{(1-a) \cdot P_{N-2}}{(1+a)} - L = \frac{(L_{frame} - L+1)*(1-a)^3}{(1+a)^3} - \frac{(1-a)^2}{(1+a)^2} L - \frac{(1-a)}{1+a} L - L; P_2 = 73$$

$$P_{N-4} \leq \frac{(1-a) \cdot P_{N-3}}{(1+a)} - L = \frac{(L_{frame} - L+1)*(1-a)^4}{(1+a)^4} - \left(\sum_{k=1}^{4} \frac{(1-a)^{k-1}}{(1+a)^{k-1}}\right) L; P_1 = 56$$

From front to back, intervals between the DMRSs are 17, 20, 25, or 31 symbols, and later DMRSs have a larger DMRS interval.

In an example, the reference signal is a DMRS, a length of the DMRS symbol is different from a length of a data symbol, and lengths of the N DMRSs are equal. It is assumed that the data length $L_{data}$ = 10 symbols, there are three DMRSs, $N$ = 3, lengths of the three DMRSs are the same, $T_i$ = 30us, $t_1$ = 20us, $L_i$ is 2 based on an equivalent length of the data symbol, $L_i$ = 2, a sampling clock offset $\varepsilon \in$ [-10%, 10%], and $a$ = 0.1. The following start position of the DMRS is obtained according to the formulae (1) and (2).

$$P_3 = L_{data} + \sum_{i=1}^{3-1} L_i + 1 \quad P_3 = 10+2*2+1=15$$

$$P_2 \leq \frac{(1-a)}{(1+a)} * P_3 - L_2, P_2 = 10$$

$$P_1 \leq \frac{(1-a)}{(1+a)} * \left(\frac{(1-a)}{(1+a)} * P_3 - L_2\right) - L_1, P_1 = 6$$

A format of the frame is as follows: [five data symbols, a DMRS 1, two data symbols, a DMRS 2, three data symbols, a DMRS 3].

In an example, the reference signal is a DRMS, and intervals between adjacent DMRSs are equal. In this case, that $P_{i+1} - P_i$ is associated with $a$ includes:

$$D = P_{i+1} - P_i \geq \max_i \left\{ \frac{(2*a)*L_{start} + (1+a)L_i}{(1-2*i*a+a)} \right\} (3)$$

The following is derived according to the formula 3:

$$(1+a) \cdot (P_i + L_i) \leq (1-a) \cdot P_{i+1}$$

The foregoing formula indicates that an end symbol of an ith DMRS is constantly kept before a start symbol of an (i+1)th DMRS.

$$P_i = L_{start} + (i-1) * D$$

The foregoing formula indicates that when DMRSs are inserted at equal intervals, a start symbol position of the i$^{th}$ DMRS is a position at which a 1$^{st}$ DMRS is inserted + (i-1) times a DMRS insertion interval.

$$P_{i+1} \geq \frac{(1+a)*(P_i+L_i)}{(1-a)}$$

$$P_{i+1} - P_i \geq \frac{(2*a)*P_i + (1+a)L_i}{(1-a)}$$

$$D \geq \frac{(2*a)*(L_{start}+(i-1)*D)+(1+a)L_i}{(1-a)}$$

$$\frac{(1-a)}{(1-a)}D - \frac{(2*a)*(i-1)*D}{(1-a)} \geq \frac{(2*a)*L_{start}+(1+a)L_i}{(1-a)}$$

$$\frac{(1-a-(2*i*a-2a))*D}{(1-a)} \geq \frac{(2*a)*L_{start}+(1+a)L_i}{(1-a)}$$

$$\frac{(1-2*i*a+a)*D}{(1-a)} \geq \frac{(2*a)*L_{start}+(1+a)L_i}{(1-a)}$$

When (1 - 2 * i * a + a) > 0, that is, $i < \dfrac{\left(\frac{1}{a}+1\right)}{2}$,

$$D \geq \max_i \left\{ \frac{(2*a)*L_{start}+(1+a)L_i}{(1-2*i*a+a)} \right\}$$

When (1 - 2 * i * a + a) < 0, that is, $i > \dfrac{\left(\frac{1}{a}+1\right)}{2}$,

$$D \leq \min_i \left\{ \frac{(2*a)*L_{start}+(1+a)L_i}{(1-2*i*a+a)} \right\},$$

where
$L_{start}$ is a start position of a 1$^{st}$ reference signal in the N reference signals, and $L_{start} \geq 1$. The formula (3) indicates that any two adjacent DMRSs need to meet a nonoverlapping condition. For example, $L_{start}$ = 8, N=2, the DMRSs have an equal length, each DMRS occupies three symbols, $L_i$ = 3, and $L_{data}$ =20. For example,

$$D_i = \left\lceil \frac{(2*a)*L_{start}+(1+a)L_i}{(1-2*i*a+a)} \right\rceil,$$

$$i = 1, D_1 = 6$$

$$i = 2, D_2 = 7$$

$$D \geq max\{D_1, D_2\}.$$

A DMRS interval is set to 7. In a frame, data and a pilot are sent in the following format: [seven data symbols, a DMRS 1, seven data symbols, a DMRS 2, six data symbols].

The formula (3) shows a method in which adjacent DMRSs are equally spaced. Because a larger interval between adjacent DMRSs is required at a tail of the frame, $P_{i+1} - P_i$ in the formula (5) needs to be greater than or equal to a largest value in intervals between all adjacent DMRSs. Further, reference signals at all positions in the frame do not overlap at possible positions of adjacent reference signals, and a pilot at the position is more accurately found in a time window in which the SFO is considered. On the receive side, calculation of SFO estimation is more accurate, and the receiving performance on the receive side can be improved.

As shown in the foregoing example, the quantity of DMRSs and the interval are mutually restricted. $L_{start} = 8$, and $L_{data} = 20$.

In this example, the quantity N of DMRSs and $D_i$ are mutually restricted. For example, in the foregoing example, $L_{start} = 8$. A value of $D_i$ obtained according to the formula (5) is shown in Table 1, where a maximum value of $D_i$ is 49, and the foregoing formula restricts only six pilots that can be calculated and inserted.

Table 1: Value of $D_i$

| a | $L_{start}$ | $L_i$ | i | $D_i$ |
|---|---|---|---|---|
| 0.1 | 8 | 3 | 1 | 6 |
| 0.1 | 8 | 3 | 2 | 7 |
| 0.1 | 8 | 3 | 3 | 10 |
| 0.1 | 8 | 3 | 4 | 17 |
| 0.1 | 8 | 3 | 5 | 49 |
| 0.1 | 8 | 3 | 6 | -49 |

D also satisfies a formula (4).

$$D = P_{i+1} - P_i \leq \frac{L_{frame} - L_N + 1 - L_{start}}{N - 1} \quad (4),$$

where

$$L_{frame} = L_{data} + \sum_{i=1}^{N} L_i \quad, \text{ and } L_{data} \text{ is a quantity of symbols of the data.}$$

The following is derived according to the formula 4:

$$P_N \leq L_{frame} - L_N + 1 = L_{data} + \sum_{i=1}^{N-1} L_i + 1$$

The foregoing formula indicates that there is no idle space between the DMRS and the data.

$$P_N = L_{start} + (N - 1) * D$$

$$D \leq \frac{L_{frame} - L_N + 1 - L_{start}}{N - 1}$$

In an example, the reference signal is a DMRS, and N DMRSs with different lengths are inserted. It is assumed that the data length $L_{data} = 10$ symbols, there are three DMRSs, $N = 3$, $L_1 = 1$, $L_2 = 2$, $L_3 = 3$ , a sampling clock offset $\varepsilon \in$ [-10%, 10%] , and $a = 0.1$. The following start position of the DMRS is obtained according to the formulae (1) and (2).

$$P_3 = L_{data} + \sum_{i=1}^{3-1} L_i + 1 \quad P_3 = 10+2+1+1=14$$

$$P_2 \leq \frac{(1-a)}{(1+a)} * P_3 - L_2, P_2 = 9$$

$$P_1 \leq \frac{(1-a)}{(1+a)} * \left( \frac{(1-a)}{(1+a)} * P_3 - L_2 \right) - L_1, P_1 = 6$$

A format of the frame is as follows: [five data symbols, a DMRS 1 (one symbol), two data symbols, a DMRS 2 (two symbols), three data symbols, a DMRS 3 (three symbols)].

A start position $P_i$ of the reference signal may be sent by the network device to the terminal device. The terminal device receives indication information from the network device, where the indication information indicates the start position $P_i$ of the reference signal.

The foregoing example in which $L_{data}$ = 136 symbols, the reference signals are the DMRSs, and $N$ = 5 is used as an example, the indication information indicates that $P_5$ = 149, $P_4$ = 118, $P_3$ = 93, $P_2$ = 73, and $P_1$ = 56.

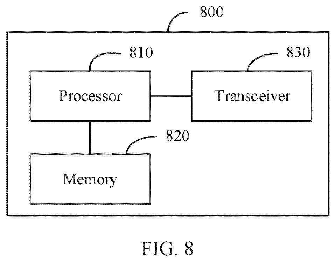

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit end device or a receive end device may be divided into functional modules based on the foregoing method examples. For example, each functional module may be obtained through division based on each function, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used. An example in which each functional module is obtained through division based on each function is used below for description.

FIG. 7 is a block diagram of an apparatus 700 according to an embodiment of this application. The apparatus 700 includes a transceiver unit 710, a processing unit 720, and a storage unit 730. The transceiver unit 710 may implement a corresponding communication function, and the transceiver unit 710 may also be referred to as a communication interface or a communication unit. The processing unit 720 is configured to process data. The storage unit 730 is configured to store instructions and/or data, and the processing unit 720 may read the instructions and/or the data in the storage unit, so that the apparatus implements the foregoing method embodiments.

The apparatus 700 may be configured to perform an action performed by a device in the foregoing method embodiments, for example, the foregoing transmit end device (the terminal device) or receive end device (the network device). In this case, the apparatus 700 may be a device or a component that can be configured in the device, the transceiver unit 710 is configured to perform a sending/receiving-related operation of the device in the foregoing method embodiments, and the processing unit 720 is configured to perform a processing-related operation of the device in the foregoing method embodiments.

In a design, the apparatus 700 is configured to perform an action performed by the transmit end device in the foregoing method embodiments.

The processing unit 720 is configured to generate a frame, including a reference signal, data, and the like in the received frame.

The transceiver unit 710 is configured to: send the frame, receive indication information, and the like.

For descriptions of the reference signal and the like, refer to the method embodiments.

In a design, the apparatus 700 is configured to perform an action performed by the receive end device (the network device) in the foregoing method embodiments.

The transceiver unit 710 is configured to receive a frame, including a reference signal, data, and the like in the received frame. The transceiver unit 710 is further configured to send indication information.

The processing unit 720 is configured to: estimate a channel based on the reference signal, demodulate data, and the like.

The apparatus 700 may implement a step or a procedure performed by the transmit end device in the method embodiments according to embodiments of this application. The apparatus 700 may include a unit configured to perform the method performed by the transmit end device in the method embodiments. In addition, the units in the apparatus 700 and the foregoing other operations and/or functions are separately used to implement corresponding procedures of the method embodiments of the transmit end device in the method embodiments.

As shown in FIG. 8, an embodiment of this application further provides an apparatus 800. The apparatus 800 includes a processor 810, and may further include one or more memories 820.

The processor 810 is coupled to the memory 820. The memory 820 is configured to store a computer program or instructions and/or data. The processor 810 is configured to execute the computer program or the instructions and/or the data stored in the memory 820, so that the method in the foregoing method embodiments is performed.

Optionally, as shown in FIG. 8, the apparatus 800 may further include a transceiver 830. The transceiver 830 is configured to receive and/or send a signal. For example, the processor 810 is configured to control the transceiver 830 to receive and/or send a signal.

The processor 810 in FIG. 8 may be the processing unit 720 in FIG. 7, and implements a function of the processing unit 720. For a specific operation performed by the processor 810, refer to the foregoing descriptions of the processing unit 720. Details are not described herein again. The transceiver 830 in FIG. 8 may be the transceiver unit 710 in FIG. 7, and implements a function of the transceiver unit 710. For a specific operation performed by the transceiver 830, refer to the foregoing descriptions of the transceiver unit 710. Details are not described herein again. The memory 820 in FIG. 8 may be the storage unit 730 in FIG. 7, and implements a function of the storage unit 730.

Optionally, the apparatus 800 includes one or more processors 810.

Optionally, the memory 820 and the processor 810 may be integrated together, or may be disposed separately.

In a solution, the apparatus 800 is configured to implement an operation performed by a device (for example, the foregoing receive end device or transmit end device) in the foregoing method embodiments.

An embodiment of this application further provides a computer-readable storage medium. The computer-readable storage medium stores computer instructions for implementing the method performed by a device (for example, the foregoing receive end device or transmit end device) in the foregoing method embodiments.

For example, when a computer program is executed by a computer, the computer is enabled to implement the method performed by the transmit end device in the foregoing method embodiments.

An embodiment of this application further provides a computer program product including instructions. When the instructions are executed by a computer, the computer is enabled to implement the method performed by a device (for example, the foregoing receive end device or transmit end device) in the foregoing method embodiments.

An embodiment of this application further provides a communication system. The communication system includes a device (for example, the foregoing receive end device or transmit end device) in the foregoing embodiments.

An embodiment of this application further provides a chip apparatus, including a processing circuit. The processing circuit is configured to: invoke a program from a memory and run the program, so that a communication device in which the chip apparatus is installed implements the method performed by a device (for example, the foregoing receive end device or transmit end device) in the foregoing method embodiments.

For explanations and beneficial effects of related content in any one of the apparatuses provided above, refer to the corresponding method embodiment provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and methods may be implemented by electronic hardware or a combination of computer software and electronic hardware. Whether the functions are implemented by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units. To be specific, the components may be located at one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a transmit end device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the foregoing usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A reference signal sending method, comprising:

   generating, by a first apparatus, a frame, wherein the frame comprises N reference signals and data, N≥2, an $i^{th}$ reference signal precedes an $(i+1)^{th}$ reference signal, 1≤i≤N, no other reference signal precedes the $i^{th}$ reference signal and the $(i+1)^{th}$ reference signal,
   at least a part of the data is comprised between the $i^{th}$ reference signal and the $(i+1)^{th}$ reference signal,
   a time length of one symbol of the data in the first apparatus is t1+Δt, t1 is a target time length of one symbol of the data in the first apparatus, an absolute value of Δt is less than or equal to an absolute value t2 of a symbol time offset caused by a maximum sampling clock offset allowed by the first apparatus,
   a time domain start position of the $i^{th}$ reference signal in the frame is $P_i$, a time domain start position of the $(i+1)^{th}$ reference signal in the frame is $P_{i+1}$, and $P_{i+1}$ - $P_i$ is associated with $a$, wherein $a=\dfrac{t2}{t1}$, and $P_{i+1}$ and $P_i$ are integers;
   and
   sending, by the first apparatus, the frame to the second apparatus.

2. The method according to claim 1, wherein that $P_{i+1}$ - $P_i$ is associated with $a$ comprises:
   $P_{i+1}$ - $P_i$ is associated with $a$ and at least one of the following parameters:

   a length of the data in the frame;

N;

a length of each reference signal in the frame; or

$P_i$.

3. The method according to claim 1 or 2, further comprising:

$N \geq 3$, the N reference signals comprise an $l^{th}$ reference signal, an $m^{th}$ reference signal, and an $n^{th}$ reference signal, $1 \leq l, m, n \leq N$,

the $l^{th}$ reference signal precedes the $m^{th}$ reference signal, the $m^{th}$ reference signal precedes the $n^{th}$ reference signal, a time domain start position of the $l^{th}$ reference signal in the frame is $P_l$, a time domain start position of the $m^{th}$ reference signal in the frame is $P_m$, and a time domain start position of the $n^{th}$ reference signal in the frame is $P_n$, wherein

$$P_n - P_m > P_m - P_l.$$

4. The method according to any one of claims 1 to 3, wherein that $P_{i+1} - P_i$ is associated with *a* comprises:

$$P_{i+1} - P_i \geq \frac{(2*a)*P_i+(1+a)L_i}{(1-a)},$$

wherein $L_i$ is a value obtained by rounding up a length of the $i^{th}$ reference signal divided by a length of one data symbol.

5. The method according to any one of claims 1 to 4, comprising:

$$P_N \leq L_{data} + \sum_{i=1}^{N-1} L_i + 1,$$

wherein

$L_{data}$ is a quantity of symbols of the data, and $L_i$ is the value obtained by rounding up the length of the $i^{th}$ reference signal divided by the length of one data symbol.

6. The method according to any one of claims 1 to 4, wherein that $P_{i+1} - P_i$ is associated with *a* comprises:

$$P_{i+1} - P_i \geq \max_i \left\{ \frac{(2*a)*L_{start} + (1+a)L_i}{(1-2*i*a+a)} \right\},$$

wherein

$L_{start}$ is a start position of a $1^{st}$ reference signal in the N reference signals, $L_{start} \geq 1$, and $L_i$ is the value obtained by rounding up the length of the $i^{th}$ reference signal divided by the length of one data symbol.

7. The method according to claim 6, comprising:

$$P_{i+1} - P_i \leq \frac{L_{frame} - L_N + 1 - L_{start}}{N - 1},$$

wherein

$L_{frame} = L_{data} + \sum_{i=1}^{N} L_i$ , and $L_{data}$ is a quantity of symbols of the data.

8. The method according to any one of claims 1 to 7, comprising:
receiving, by the first apparatus, indication information, wherein the indication information indicates $P_i$, and $1 \leq i \leq N$.

9. A reference signal sending method, comprising:

receiving, by a second apparatus, a frame, wherein the frame comprises N reference signals and data, N≥2, an $i^{th}$ reference signal precedes an $(i+1)^{th}$ reference signal, 1≤i≤N, no other reference signal precedes the $i^{th}$ reference signal and the $(i+1)^{th}$ reference signal, at least a part of the data is comprised between the $i^{th}$ reference signal and the $(i+1)^{th}$ reference signal,

a time length of one symbol of the data in a first apparatus is t1+Δt, t1 is a target time length of one symbol of the data in the first apparatus and the second apparatus, an absolute value of Δt is less than or equal to an absolute value t2 of a symbol time offset caused by a maximum sampling clock offset allowed by the first apparatus,

a time domain start position of the $i^{th}$ reference signal in the frame is $P_i$, a time domain start position of the $(i+1)^{th}$ reference signal in the frame is $P_{i+1}$, and $P_{i+1}$ - $P_i$ is associated with *a*, wherein $a=\dfrac{t2}{t1}$, and $P_{i+1}$ and $P_i$ are integers;

and

demodulating, by the second apparatus, the data based on the N reference signals.

**10.** The method according to claim 9, wherein that $P_{i+1}$ - $P_i$ is associated with *a* comprises:

$P_{i+1}$ - $P_i$ is associated with *a* and at least one of the following parameters:

a length of the data in the frame;
N;
a length of each reference signal in the frame; or
$P_i$.

**11.** The method according to claim 9 or 10, further comprising:

N≥3, the N reference signals comprise an $l^{th}$ reference signal, an $m^{th}$ reference signal, and an $n^{th}$ reference signal, 1≤l, m, n≤N,
the $l^{th}$ reference signal precedes the $m^{th}$ reference signal, the $m^{th}$ reference signal precedes the $n^{th}$ reference signal, a time domain start position of the $l^{th}$ reference signal in the frame is $P_l$, a time domain start position of the $m^{th}$ reference signal in the frame is $P_m$, and a time domain start position of the $n^{th}$ reference signal in the frame is $P_n$, wherein

$$P_n – P_m > P_m – P_l.$$

**12.** The method according to any one of claims 9 to 11, wherein that $P_{i+1}$ - $P_i$ is associated with *a* comprises:

$P_{i+1} - P_i \geq \dfrac{(2*a)*P_i+(1+a)L_i}{(1-a)}$, wherein $L_i$ is a value obtained by rounding up a length of the $i^{th}$ reference signal divided by a length of one data symbol.

**13.** The method according to any one of claims 9 to 12, comprising:

$$P_N \leq L_{data} + \sum_{i=1}^{N-1} L_i + 1,$$

wherein
$L_{data}$ is a quantity of symbols of the data, and $L_i$ is the value obtained by rounding up the length of the $i^{th}$ reference signal divided by the length of one data symbol.

**14.** The method according to any one of claims 9 to 12, wherein that $P_{i+1}$ - $P_i$ is associated with *a* comprises:

$$P_{i+1} - P_i \geq \max_i \left\{ \frac{(2*a)*L_{start}+(1+a)L_i}{(1-2*i*a+a)} \right\},$$

wherein
$L_{start}$ is a start position of a $1^{st}$ reference signal in the N reference signals, $L_{start} \geq 1$, and $L_i$ is the value obtained by rounding up the length of the $i^{th}$ reference signal divided by the length of one data symbol.

**15.** The method according to claim 14, comprising:

$$P_{i+1} - P_i \leq D \leq \frac{L_{frame} - L_N + 1 - L_{start}}{N - 1},$$

wherein

$L_{frame} = L_{data} + \sum_{i=1}^{N} L_i$ , and $L_{data}$ is a quantity of symbols of the data.

**16.** The method according to any one of claims 9 to 15, comprising:
sending, by the second apparatus, indication information to the first apparatus, wherein the indication information indicates $P_i$, and $1 \leq i \leq N$.

**17.** A reference signal sending method, comprising:

generating, by a first apparatus, a frame, wherein the frame comprises N reference signals and data, N≥2, an $i^{th}$ reference signal precedes an $(i+1)^{th}$ reference signal, $1 \leq i \leq N$, no other reference signal precedes the $i^{th}$ reference signal and the $(i+1)^{th}$ reference signal,
at least a part of the data is comprised between the $i^{th}$ reference signal and the $(i+1)^{th}$ reference signal,
a time length of one symbol of the data in the first apparatus is t1+Δt, t1 is a target time length of one symbol of the data in the first apparatus and the second apparatus, an absolute value of Δt is less than or equal to an absolute value t2 of a symbol time offset caused by a maximum sampling clock offset allowed by the first apparatus,
a time domain start position of the $i^{th}$ reference signal in the frame is $P_i$, a time domain start position of the $(i+1)^{th}$ reference signal in the frame is $P_{i+1}$, and $P_{i+1}$ - $P_i$ is associated with $a$, wherein $a = \frac{t2}{t1}$, and $P_{i+1}$ and $P_i$ are integers;

sending, by the first apparatus, the frame to the second apparatus;
receiving, by the second apparatus, the frame; and
demodulating, by the second apparatus, the data based on the reference signal.

**18.** The method according to claim 17, wherein that $P_{i+1}$ - $P_i$ is associated with $a$ comprises:
$P_{i+1}$ - $P_i$ is associated with $a$ and at least one of the following parameters:

a length of the data in the frame;
N;
a length of each reference signal in the frame; or
$P_i$.

**19.** The method according to claim 17 or 18, further comprising:

N≥3, the N reference signals comprise an $l^{th}$ reference signal, an $m^{th}$ reference signal, and an $n^{th}$ reference signal, $1 \leq l$, m, n≤N,
the $l^{th}$ reference signal precedes the $m^{th}$ reference signal, the $m^{th}$ reference signal precedes the $n^{th}$ reference signal, a time domain start position of the $l^{th}$ reference signal in the frame is $P_l$, a time domain start position of the $m^{th}$ reference signal in the frame is $P_m$, and a time domain start position of the $n^{th}$ reference signal in the frame is $P_n$, wherein

$$P_n - P_m > P_m - P_l.$$

**20.** The method according to any one of claims 17 to 19, wherein that $P_{i+1}$ - $P_i$ is associated with $a$ comprises:

$$P_{i+1} - P_i \geq \frac{(2*a)*P_i + (1+a)L_i}{(1-a)},$$

wherein $L_i$ is a value obtained by rounding up a length of the $i^{th}$ reference signal divided by a length of one data symbol.

**21.** The method according to any one of claims 17 to 20, comprising:

$$P_N \leq L_{data} + \sum_{i=1}^{N-1} L_i + 1,$$

wherein

$L_{data}$ is a quantity of symbols of the data, and $L_i$ is the value obtained by rounding up the length of the $i^{th}$ reference signal divided by the length of one data symbol.

22. The method according to any one of claims 17 to 20, wherein that $P_{i+1} - P_i$ is associated with $a$ comprises:

$$P_{i+1} - P_i \geq \max_i \left\{ \frac{(2*a)*L_{start} + (1+a)L_i}{(1 - 2*i*a + a)} \right\},$$

wherein

$L_{start}$ is a start position of a 1st reference signal in the N reference signals, $L_{start} \geq 1$, and $L_i$ is the value obtained by rounding up the length of the $i^{th}$ reference signal divided by the length of one data symbol.

23. The method according to claim 22, comprising:

$$P_{i+1} - P_i \leq \frac{L_{frame} - L_N + 1}{N-1} L_{start},$$

wherein

$L_{frame} = L_{data} + \sum_{i=1}^{N} L_i$ , and $L_{data}$ is a quantity of symbols of the data.

24. The method according to any one of claims 17 to 23, comprising:

sending, by the second apparatus, indication information to the first apparatus, wherein the indication information indicates $P_i$, and $1 \leq i \leq N$; and
receiving, by the first apparatus, the indication information.

25. A communication apparatus, comprising at least one processor, wherein the at least one processor is coupled to at least one memory, and the at least one processor is configured to execute a computer program or instructions stored in the at least one memory, so that the communication apparatus performs the method according to any one of claims 1 to 8.

26. A communication apparatus, comprising at least one processor, wherein the at least one processor is coupled to at least one memory, and the at least one processor is configured to execute a computer program or instructions stored in the at least one memory, so that the communication apparatus performs the method according to any one of claims 9 to 16.

27. A computer-readable storage medium, wherein the computer-readable storage medium stores a computer program, and when the computer program runs on a computer, the computer is enabled to perform the method according to any one of claims 1 to 8.

28. A computer-readable storage medium, wherein the computer-readable storage medium stores a computer program, and when the computer program runs on a computer, the computer is enabled to perform the method according to any one of claims 16 to 24.

29. A chip system, comprising a processor, configured to invoke a computer program from a memory and run the computer program, to enable a communication device on which the chip system is installed to perform the method according to any one of claims 1 to 8.

30. A chip system, comprising a processor, configured to invoke a computer program from a memory and run the computer program, to enable a communication device on which the chip system is installed to perform the method according to any one of claims 9 to 16.

31. A communication system, comprising:

a first apparatus and a second apparatus, wherein the first apparatus communicates with the second apparatus; and
the first apparatus performs the method according to any one of claims 1 to 8, and the second apparatus performs the method according to any one of claims 9 to 16.

FIG. 1

FIG. 2

FM0 symbol

FM0 sequence

0   0

1   1

00   00

01   01

10   10

11   11

FIG. 3

Tx sampling $T_s$

Rx sampling $T_s'$   $\varepsilon$

FIG. 4

Tx

Rx-1

Rx-2

Reference signal 1

Reference signal 2

Reference signal 1

Reference signal 2

Reference signal 1

Reference signal 2

Possible location of the reference signal 1

Possible location of the reference signal 2

FIG. 5

Terminal device

Network device

S601

Generate a frame, where the frame includes data and a plurality of reference signals, and a difference between start positions of two adjacent reference signals is associated with a maximum sampling clock offset allowed by the terminal device

S602 Send the frame

FIG. 6

700

Transceiver unit — 710

Processing unit — 720

Storage unit — 730

FIG. 7

800

810

830

Processor

Transceiver

820

Memory

FIG. 8

# INTERNATIONAL SEARCH REPORT

| International application No. |
|---|
| **PCT/CN2024/084047** |

**A. CLASSIFICATION OF SUBJECT MATTER**

H04L 1/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, DWPI, ENTXTC, ENTXT, VEN, 3GPP, ETSI, IETF: 参考信号, 帧, 时间, 长度, 最大, 采样, 时钟, 偏差, 绝对值, reference signal, frame, time, length, maximum, max, sample, clock, skew, absolute value

**C. DOCUMENTS CONSIDERED TO BE RELEVANT**

| Category* | Citation of document, with indication, where appropriate, of the relevant passages | Relevant to claim No. |
|---|---|---|
| A | WO 2016127699 A1 (ZTE CORP.) 18 August 2016 (2016-08-18) entire document | 1-31 |
| A | CN 108259148 A (HUAWEI TECHNOLOGIES CO., LTD.) 06 July 2018 (2018-07-06) entire document | 1-31 |
| A | CN 109802792 A (HUAWEI TECHNOLOGIES CO., LTD.) 24 May 2019 (2019-05-24) entire document | 1-31 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 April 2024** | **27 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084047**

| Patent document cited in search report | | | Publication date (day/month/year) | Patent family member(s) | | | Publication date (day/month/year) |
|---|---|---|---|---|---|---|---|
| WO | 2016127699 | A1 | 18 August 2016 | None | | | |
| CN | 108259148 | A | 06 July 2018 | None | | | |
| CN | 109802792 | A | 24 May 2019 | WO | 2019096235 | A1 | 23 May 2019 |
| | | | | EP | 3605934 | A1 | 05 February 2020 |
| | | | | EP | 3605934 | A4 | 10 June 2020 |
| | | | | EP | 3605934 | B1 | 17 August 2022 |
| | | | | US | 2020280415 | A1 | 03 September 2020 |
| | | | | US | 11323221 | B2 | 03 May 2022 |

Form PCT/ISA/210 (patent family annex) (July 2022)